# FASCICULE DE BREVET EUROPEEN

(11) **EP 2 379 348 B1**
(45) Date de publication et mention de la délivrance du brevet: **17.10.2012**
(21) Numéro de dépôt: 09771367.1
(22) Date de dépôt: 11.12.2009
(51) Int. Cl.: B60C 9/22

(54) **PNEUMATIQUE POUR VEHICULES COMPORTANT UNE COUCHE D'ELEMENTS DE RENFORCEMENT CIRCONFERENTIELS**
EINE LAGE AUS UMFANGSVERSTÄRKUNGSELEMENTEN UMFASSENDER FAHRZEUGREIFEN
VEHICLE TYRE COMPRISING A LAYER OF CIRCUMFERENTIAL REINFORCING ELEMENTS

(30) Priorité: 17.12.2008 FR 0858730
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: VALLE, Alain, F-63118 Cebazat (FR)
(74) Mandataire: Le Cam, Stéphane Georges Elie
(86) Numéro de dépôt international: PCT/EP2009/066988
(87) Numéro de publication internationale: WO 2010/069887

(56) Documents cités:
- EP-A- 0 565 339
- WO-A-98/02320
- WO-A-2005/025895
- US-A1- 2003 155 056
- US-B1- 6 244 315
- US-B1- 6 415 841

## Description

L'invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP-A- 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondant, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien contient l'axe de rotation du pneumatique.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Le document WO-A-2005/025895 décrit les caractéristiques techniques du préambule de la revendication 1.

L'invention a pour but de fournir un pneumatique permettant d'améliorer les propriétés d'usure et d'adhérence du pneumatique, dans le cas de pneumatiques pour motocyclette.

Ce but est atteint selon l'invention par un pneumatique à armature de carcasse radiale comprenant une armature de sommet, comportant au moins une couche d'éléments de renforcement circonférentiels répartis axialement selon un pas variable, elle-même coiffée radialement d'une bande de roulement, ladite bande de roulement étant réunie à deux bourrelets par l'intermédiaire de deux flancs, la couche d'éléments de renforcement circonférentiels étant constituée d'au moins cinq parties dont une partie centrale, deux parties intermédiaires et deux parties axialement extérieures, la valeur du pas dans une partie intermédiaire étant inférieure à la valeur du pas de la partie axialement extérieure, axialement séparée de la partie centrale par ladite partie intermédiaire, et la valeur du pas dans une partie intermédiaire étant inférieure à la valeur du pas de la partie centrale.

Une couche d'éléments de renforcement circonférentiels au sens de l'invention est constituée d'au moins un élément de renforcement orienté selon un angle formé avec la direction longitudinale inférieur à 5°.

Le pas est la distance mesurée selon l'abscisse curviligne de la couche d'éléments de renforcement circonférentiels entre les centres de deux éléments de renforcement circonférentiels consécutifs (ou voisins). Dans le cas d'une couche d'éléments de renforcement circonférentiels fabriquée avec plusieurs éléments de renforcement indépendant posés simultanément ou bien avec plusieurs éléments de renforcement formant une bandelette, le pas entre ces plusieurs éléments de renforcement étant constant, le pas « variable » selon l'invention est mesuré selon l'abscisse curviligne de la couche d'éléments de renforcement circonférentiels entre les centres des ensembles d'éléments de renforcement posés simultanément. En d'autres termes, dans ces derniers cas, on assimile des éléments de renforcement posés simultanément ou sous forme de bandelette à un renfort unique dont on va déterminer le centre (selon la direction de l'abscisse curviligne de la couche d'éléments de renforcement circonférentiels) pour mesurer ledit pas « variable ».

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

Le pneumatique ainsi défini selon l'invention présente une couche d'éléments de renforcement circonférentiels répartis avec un pas variable conduisant à une couche présentant une rigidité selon la direction circonférentielle, ou rigidité circonférentielle, qui varie selon la direction axiale. Selon l'invention, la couche d'éléments de renforcement circonférentiels présente une rigidité selon la direction circonférentielle qui augmente depuis une extrémité axiale jusqu'à une zone intermédiaire pour diminuer à nouveau depuis cette zone intermédiaire jusqu'à la partie centrale de ladite couche.

Selon une première variante de réalisation de l'invention, la valeur du pas dans une partie axialement extérieure est supérieure à la valeur du pas de la partie centrale. La rigidité selon la direction circonférentielle de la partie axialement extérieure de la couche d'éléments de renforcement circonférentiels est alors inférieure à la rigidité selon la direction circonférentielle de la partie centrale. Cette variante de réalisation de l'invention sera notamment préférée pour des pneumatiques destinés à équiper l'arrière d'une motocyclette, du fait du profil de ces pneumatiques. Par profil du pneumatique, on entend la courbure, ou somme des courbures, de la surface de bande de roulement selon une vue méridienne.

Selon une deuxième variante de réalisation de l'invention, la valeur du pas dans une partie axialement extérieure est inférieure à la valeur du pas de la partie centrale. La rigidité selon la direction circonférentielle de la partie axialement extérieure de la couche d'éléments de renforcement circonférentiels est alors supérieure à la rigidité selon la direction circonférentielle de la partie centrale. Cette variante de réalisation de l'invention sera notamment préférée pour des pneumatiques destinés à équiper l'avant d'une motocyclette, du fait du profil de ces pneumatiques.

Un pneumatique ainsi réalisé selon l'une ou l'autre des ces variantes de l'invention permet d'améliorer les performances en termes notamment d'usure et d'adhérence du fait des choix faits concernant la variation du pas entre les éléments de renforcement de la couche d'éléments de renforcement circonférentiels dont la densité est maximum dans les zones intermédiaires. La répartition de rigidité de la couche d'éléments de renforcement circonférentiels favorise notamment la mise à plat du pneumatique à fort carrossage.

Par ailleurs, les inventeurs ont su mettre en évidence que la diminution locale de la densité d'éléments de renforcement dans la couche d'éléments de renforcement circonférentiels permet tout de même de conserver le profil souhaité du pneumatique bien que notamment la zone du sommet du pneumatique présente une densité d'éléments de renforcement circonférentiels inférieure à celle requise usuellement dans le cas d'une répartition à pas constant. La rigidité de la partie centrale de la couche d'éléments de renforcement circonférentielle reste suffisante afin d'assurer un frettage satisfaisant du pneumatique au niveau de cette partie centrale pour supporter les contraintes imposées notamment lors du gonflage ou des roulages à grandes vitesses et limiter l'expansion circonférentielle de l'armature de sommet.

D'autres avantages d'un pneumatique selon l'invention comparé à un pneumatique comportant une couche d'éléments de renforcement circonférentiels répartis avec un pas constant sur toute la largeur axiale de ladite couche sont d'une part son poids et d'autre part, son coût de fabrication. La structure du pneumatique selon l'invention étant allégée comparée à celle d'un pneumatique usuel comportant une couche d'éléments de renforcement circonférentiels répartis avec un pas constant, le poids du pneumatique selon l'invention est inférieur à celui du pneumatique usuel. En effet, le pas entre les éléments de renforcement d'un pneumatique usuel comportant une couche d'éléments de renforcement circonférentiels répartis avec un pas constant est défini à partir du pas minimum nécessaire pour satisfaire aux différentes normes d'acceptations pour la commercialisation des pneumatiques. Le pneumatique selon l'invention voit donc une diminution de la quantité de matière nécessaire pour réaliser la couche d'éléments de renforcement circonférentiels.

De la même façon, le coût des matériaux pour la fabrication d'un pneumatique selon l'invention est inférieur à celui d'un pneumatique comportant une couche d'éléments de renforcement circonférentiels répartis avec un pas constant puisque la quantité de matière nécessaire pour réaliser la couche d'éléments de renforcement circonférentiels est inférieure. En outre, pour les mêmes raisons, le temps de fabrication de la couche d'éléments de renforcement circonférentiels du pneumatique selon l'invention est diminué par rapport au temps de fabrication d'une couche d'éléments de renforcement circonférentiels répartis avec un pas constant.

Selon un mode de réalisation préféré dans le cas de la première variante de l'invention selon laquelle la valeur du pas dans une partie axialement extérieure est supérieure à la valeur du pas de la partie centrale, le rapport de la valeur du pas des parties axialement extérieures sur la valeur du pas dans la partie centrale est compris entre 1.05 et 4.

De préférence également selon ce mode de réalisation, le rapport de la valeur du pas des parties intermédiaires sur la valeur du pas dans la partie centrale est compris entre 0.5 et 0.95.

Selon un mode de réalisation préféré dans le cas de la deuxième variante de l'invention selon laquelle la valeur du pas dans une partie axialement extérieure est inférieure à la valeur du pas de la partie centrale, le rapport de la valeur du pas des parties axialement extérieures sur la valeur du pas dans la partie centrale est compris entre 0.5 et 0.95.

De préférence également selon ce mode de réalisation, le rapport de la valeur du pas des parties intermédiaires sur la valeur du pas dans la partie centrale est compris entre 0.4 et 0.9.

Avantageusement selon l'invention, la largeur axiale de la partie centrale de la couche d'éléments de renforcement circonférentiels est comprise entre 10 et 50 % de la largeur axiale de la couche d'éléments de renforcement circonférentiels.

Avantageusement encore selon l'invention, la largeur axiale de chacune des parties axialement extérieures de la couche d'éléments de renforcement circonférentiels est comprise entre 7 et 15 % de la largeur axiale de la couche d'éléments de renforcement circonférentiels.

Avantageusement également selon l'invention, la largeur axiale de chacune des parties intermédiaires de la couche d'éléments de renforcement circonférentiels est comprise entre 10 et 38 % de la largeur axiale de la couche d'éléments de renforcement circonférentiels.

L'invention prévoit avantageusement que la répartition des valeurs du pas de la couche d'éléments de renforcement circonférentiels est symétrique par rapport au plan équatorial du pneumatique.

Avantageusement encore, la couche d'éléments de renforcement circonférentiels est centrée sur le sommet du pneumatique. La répartition des zones est ainsi symétrique par rapport au plan équatorial du pneumatique. La répartition des éléments de renforcement circonférentiels est alors également symétrique selon la direction axiale par rapport au plan équatorial du pneumatique.

Selon un premier mode de réalisation de l'invention, le pas entre les éléments de renforcements orientés circonférentiellement est constant dans au moins l'une des parties de la couche d'éléments de renforcement circonférentiels. De préférence, le pas est constant dans au moins la partie centrale.

Selon un deuxième mode de réalisation de l'invention, le pas entre les éléments de renforcements orientés circonférentiellement est variable dans au moins l'une des parties de la couche d'éléments de renforcement circonférentiels.

Selon d'autres modes de réalisation de l'invention, au moins l'une des parties de la couche d'éléments de renforcement circonférentiels combine des zones de pas constants et des zones de pas variables ; par exemple une partie peut combiner une zone centrale à pas constant et des zones axialement extérieures à pas variables, chacune présentant un pas croissant vers ladite zone centrale.

Selon une réalisation préférée de l'invention, dans le cas d'au moins une partie comportant au moins une zone à pas variable, la valeur du pas selon la direction transversale obéit à une suite sur au moins ladite zone à pas variable de ladite au moins une partie de la couche d'éléments de renforcement circonférentiels.

Selon un premier mode de réalisation, la valeur du pas obéit à une suite arithmétique de type U(n) = Uo + nr, avec Uo compris entre 0,4 mm et 4 mm, et r, la raison de la suite compris entre 0,001 et 0,1.

Selon un deuxième mode de réalisation, la valeur du pas obéit à une suite géométrique de type U(n) = Uo x rn, avec Uo compris entre 0,4 mm et 4 mm, et r, la raison de la suite compris entre 1,001 et 1,025.

Selon d'autres modes de réalisation de l'invention, la valeur du pas peut être une combinaison de plusieurs suites en fonction de la position axiale sur ladite couche.

Selon une variante de réalisation du pneumatique selon l'invention, l'armature de sommet comporte au moins une couche de sommet de travail d'éléments de renforcement inextensibles faisant avec la direction circonférentielle des angles compris entre 10° et 45°, et de préférence au moins deux couches de sommet de travail d'éléments de renforcement inextensibles croisés d'une couche à l'autre en faisant avec la direction circonférentielle des angles compris entre 10° et 45°.

Une réalisation avantageuse de l'invention prévoit que la couche d'éléments de renforcement circonférentiels est positionnée au moins partiellement radialement à l'extérieur d'une couche de travail. Lorsque la couche d'éléments de renforcement circonférentiels est réalisée radialement à l'extérieur de deux couches de travail et placée directement sous la bande de roulement, elle peut notamment contribue à l'amélioration de la stabilité à haute vitesse.

La couche d'éléments de renforcement circonférentiels peut ainsi être réalisée directement sous la bande de roulement pour former outre sa fonction première une couche de protection de la carcasse et des autres couches de la structure de renforcement de sommet, contre des agressions mécaniques éventuelles.

La couche d'éléments de renforcement circonférentiels peut encore être réalisée entre les couches de travail, notamment par souci économique, la quantité de matière et le temps de pose étant ainsi diminués.

Une autre réalisation avantageuse de l'invention prévoit que la couche d'éléments de renforcement circonférentiels est positionnée au moins partiellement radialement à l'intérieur de la couche de travail radialement la plus à l'intérieure. Selon cette réalisation, la couche d'éléments de renforcement circonférentiels est réalisée radialement à l'intérieur des couches de travail et peut notamment permettre d'améliorer encore l'adhérence et la motricité du pneumatique.

Une autre variante de l'invention prévoit qu'au moins une couche d'éléments de renforcement circonférentiels est positionnée au moins partiellement radialement à l'intérieur de la structure de renfort de type carcasse.

Un pneumatique selon l'invention, notamment lorsqu'au moins une partie de la structure de renforcement de sommet, telle qu'une couche d'éléments de renforcement circonférentiels, est réalisée radialement à l'intérieur de la structure de carcasse, est avantageusement réalisé selon une technique de fabrication du type sur noyau dur ou forme rigide.

De préférence également, les éléments de renforcement de la couche d'éléments de renforcement circonférentiels sont métalliques et/ou textiles et/ou en verre.

De préférence encore, les éléments de renforcement de la couche d'éléments de renforcement circonférentiels présentent un module d'élasticité supérieur à 6000 N/mm².

Selon un autre mode de réalisation de l'invention, les éléments de renforcement de la couche d'éléments de renforcement circonférentiels sont des câbles métalliques présentant une courbe contrainte de traction en fonction de l'allongement relatif ayant des faibles pentes pour les faibles allongements et une pente sensiblement constante et forte pour les allongements supérieurs.

Dans une variante avantageuse de l'invention, une couche d'éléments de renforcement circonférentiels peut être réalisée en plusieurs parties mises en place en différentes positions radiales ou différents niveaux du pneumatique. Un tel pneumatique peut notamment comporter une partie de la couche d'éléments de renforcement circonférentiels radialement à l'extérieur des autres éléments de renforcement dans la partie centrale du pneumatique, c'est-à-dire sous la partie centrale de la bande de roulement. Cette partie de la couche d'éléments de renforcement circonférentiels permet alors notamment une protection de la carcasse contre d'éventuelles agressions pouvant intervenir par la partie centrale de la bande de roulement, considérée comme la plus exposée. Des parties latérales de la couche d'éléments de renforcement circonférentiels, indépendantes de la partie centrale de ladite couche d'éléments de renforcement circonférentiels, peuvent être positionnées à tous niveaux, c'est-à-dire soit radialement à l'intérieur des couches de travail soit entre-elles soit encore radialement à l'intérieur de la couche de carcasse, notamment en vue de diminuer la quantité d'éléments de renforcement et le temps de réalisation d'une telle couche d'éléments de renforcement circonférentiels. L'invention prévoit encore, dans le cas d'une couche d'éléments de renforcement circonférentiels réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique. Une telle répartition non symétrique peut en outre être liée à un choix de matériaux différents des éléments de renforcement circonférentiels.

Conformément à ce type de réalisation d'une couche d'éléments de renforcement circonférentiels fractionnée en plusieurs parties, l'invention prévoit avantageusement un recouvrement des extrémités axiales desdites parties entre-elles.

Selon un mode de réalisation préféré de l'invention, les éléments de renforcement de la structure de renfort de type carcasse font avec la direction circonférentielle un angle compris entre 65° et 90°.

Selon une variante de l'invention, la structure de renforcement de sommet comporte au moins deux couches d'éléments de renforcement, les tronçons formant entre eux des angles compris entre 20 et 160°, d'une couche à la suivante.

Selon un mode de réalisation préféré selon cette variante de l'invention, au moins dans la zone centrale de la bande de roulement, les éléments de renforcements d'une couche de travail présentent des angles, formés avec la direction longitudinale, identiques, lesdits angles étant mesurés aux points d'intersections avec un plan circonférentiel, quel que soit ledit plan circonférentiel. En d'autres termes, pour un plan circonférentiel de coupe donné, les éléments de renforcement présentent tous le même angle formé avec la direction longitudinale aux points d'intersections avec ledit plan circonférentiel de coupe. Par ailleurs, l'angle précité peut varier selon le plan circonférentiel de coupe considéré.

De préférence encore selon cette variante de l'invention, au moins dans la zone centrale de la bande de roulement, les éléments de renforcement d'une couche de travail sont équidistants les uns des autres selon tous plans circonférentiels; la distance séparant des éléments de renforcement adjacents pouvant quant à elle varier selon le plan circonférentiel de coupe considéré, ou plus précisément, la distance entre des éléments de renforcement adjacents pouvant varier selon la direction axiale.

Une autre variante de réalisation de l'invention prévoit qu'au moins une couche de travail est réalisée au moins partiellement radialement à l'intérieur de la structure de renfort de type carcasse.

Selon un premier mode de réalisation de l'invention, l'ensemble des couches de travail est réalisé radialement à l'intérieur d'au moins une structure de carcasse, c'est-à-dire à l'intérieur d'au moins une couche de carcasse. Au moins une structure de renfort de type carcasse couvre ainsi radialement la structure complète de renforcement de sommet.

Selon un second mode de réalisation préféré de l'invention, au moins une couche d'éléments de renforcement de travail de la structure de renforcement de sommet est réalisée radialement à l'extérieur de la structure de renfort de type carcasse. Selon ce second mode de réalisation de l'invention, la couche d'éléments de renforcement de travail assume une fonction de protection à l'égard de la carcasse et des autres couches de la structure de renforcement de sommet, contre des agressions mécaniques éventuelles.

Dans une variante avantageuse de l'invention, une couche d'éléments de renforcement de travail peut être réalisée en plusieurs parties mises en place en différentes positions radiales ou différents niveaux du pneumatique. Un tel pneumatique peut notamment comporter une partie de la couche d'éléments de renforcement de travail radialement à l'extérieur des éléments de renforcement de la structure de carcasse dans la partie centrale du pneumatique, c'est-à-dire sous la partie centrale de la bande de roulement. Cette partie de la couche d'éléments de renforcement de travail permet alors notamment une protection de la carcasse contre d'éventuelles agressions pouvant intervenir par la partie centrale de la bande de roulement, considérée comme la plus exposée. L'invention prévoit encore, dans le cas d'une couche d'éléments de renforcement de travail réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique.

Conformément à ce type de réalisation d'une couche d'éléments de renforcement de travail fractionnée en plusieurs parties, l'invention prévoit avantageusement un recouvrement des extrémités axiales desdites parties entre-elles.

Il faut noter, comme énoncé précédemment, qu'un pneumatique selon l'invention, notamment lorsqu'au moins une partie de la structure de renforcement de sommet est réalisée radialement à l'intérieur de la structure de carcasse, est avantageusement réalisé selon une technique de fabrication du type sur noyau dur ou forme rigide.

Selon une variante de réalisation de l'invention, au moins une couche d'éléments de renforcement de travail est constituée d'au moins un fil continu de renforcement formant dans la zone centrale de ladite couche des tronçons présentant des angles, formés avec la direction longitudinale, identiques, lesdits angles étant mesurés aux points d'intersections avec un plan circonférentiel, deux tronçons adjacents étant liés par une boucle, et les tronçons formant un angle avec la direction longitudinale compris entre 10 et 80°.

Le terme « fil » désigne en toute généralité, aussi bien des mono-filaments, des fibres multifilamentaires (éventuellement tordues sur elles-mêmes) ou des assemblages comme des câbles textiles ou métalliques, des retors ou bien encore n'importe quel type d'assemblage équivalent, comme par exemple, un câble hybride, et ceci, quelle que soient la ou les matières, le traitement éventuel de ces fils, par exemple un traitement de surface ou enrobage, ou préencollage, pour favoriser l'adhésion sur le caoutchouc ou toute autre matière.

Selon cette variante avantageuse de l'invention, la couche de travail est réalisée avec au moins un fil dont aucune extrémité libre n'est présente sur les bords de ladite couche. De préférence, la réalisation de la couche est faite avec un seul fil et la couche est du type « mono-fil ». Toutefois, la réalisation industrielle de telles couches conduit à des discontinuités notamment dues à des changements de bobine. Une réalisation préférée de l'invention consiste encore à n'utiliser qu'un seul ou un faible nombre de fils pour une couche de travail et il convient de disposer les débuts et fins de fils dans la zone centrale de ladite couche.

Un pneumatique selon l'invention ainsi réalisé comporte une structure de renforcement qui ne présente aucune extrémité libre des éléments de renforcement au niveau des bords axialement extérieurs des couches de travail.

Les études réalisées ont notamment mis en évidence que la présence de couches usuelles d'éléments de renforcement présentant un angle avec la direction longitudinale conduit à des rigidités locales, circonférentielles et de cisaillement, qui diminuent à l'approche des bords desdites couches, la tension aux extrémités des éléments de renforcement étant nulle. Une tension locale nulle des éléments de renforcement se traduit par une moindre efficacité desdits éléments de renforcement dans cette zone. Or, les rigidités des bords des couches sont particulièrement importantes lorsque le pneumatique est utilisé dans les plus forts carrossages, en courbe, la partie du pneumatique correspondant à ces zones se trouvant alors en regard du sol.

La réalisation de pneumatiques pour motocyclettes conduit à des valeurs de courbures importantes pour une utilisation desdits pneumatiques en carrossage. Un pneumatique réalisé selon cette variante de l'invention et qui comporte une structure de renforcement qui ne présente aucune extrémité libre des éléments de renforcement au niveau des bords axialement extérieurs des couches de travail, permet ainsi notamment de renforcer les propriétés d'adhérence et de motricité des pneumatiques pour une utilisation en fort carrossage.

Un tel pneumatique est avantageusement réalisé selon une technique du type sur noyau dur ou toroïdal qui autorise notamment la mise en place des éléments de renforcement dans la position quasi-finale ; en effet, une étape de conformation n'étant pas requise selon ce type de procédé les éléments de renforcement ne sont plus déplacés après leur mise en place.

Dans une réalisation avantageuse de l'invention, notamment pour optimiser encore les rigidités de la structure de renforcement le long du méridien du pneumatique, et en particulier aux bords des couches de travail, les angles formés par lesdits tronçons du fil des couches de travail avec la direction longitudinale sont variables selon la direction transversale tels que lesdits angles sont supérieurs sur les bords axialement extérieurs des couches d'éléments de renforcement par rapport aux angles desdits tronçons mesurés au niveau du plan équatorial du pneumatique.

L'utilisation d'une technique du type sur noyau dur qui autorise notamment la mise en place des éléments de renforcement dans la position quasi-finale sans nécessiter d'étape de conformation présente encore des avantages. En effet, une technique du type sur noyau dur autorise notamment de manière simple des variations d'angles nettement supérieures à ce qu'il est possible d'obtenir selon des procédés comportant une étape de conformation. En outre, lesdites variations d'angle, ledit angle tendant vers 90° aux bords des couches de travail, conduit à une augmentation du pas et favorise la réalisation des boucles, du fait de la réduction de l'encombrement.

Un premier mode de réalisation des variantes de réalisation de l'invention selon lesquelles les angles formés par lesdits tronçons du fil des couches de travail avec la direction longitudinale sont variables selon la direction transversale, consiste à faire varier l'angle des tronçons d'une manière monotone depuis le plan équatorial du pneumatique jusqu'aux bords de la couche de travail.

Un second mode de réalisation de ces variantes consiste à faire évoluer l'angle par palier depuis le plan équatorial du pneumatique jusqu'aux bords de la couche de travail.

Un dernier mode de réalisation de ces variantes consiste en une évolution de l'angle telle que des valeurs données soient obtenues pour des positions axiales données.

Ces différents modes de réalisation des variantes de réalisation de l'invention selon lesquelles les angles formés par lesdits tronçons du fil des couches de travail avec la direction longitudinale sont variables selon la direction transversale permettent en d'autres termes, d'obtenir une forte rigidité circonférentielle de la structure de renforcement du sommet par la présence d'angles fermés, c'est-à-dire faibles, dans la zone du sommet du pneu, c'est-à-dire dans la zone encadrant le plan équatorial. Et au contraire la présence d'angles ouverts, c'est-à-dire d'angles tendant vers 45°, voir au-delà vers 90°, peut être obtenue sur les bords de la couche de travail ou plus exactement au niveau des épaules du pneumatique pour améliorer l'adhérence, la motricité, le confort, ou encore la température de fonctionnement du pneumatique ; en effet, de telles variations d'angles permettent de moduler les rigidités de cisaillement des couches de travail.

Selon une réalisation préférée de l'invention, les éléments de renforcement des couches de travail sont en matériau textile.

Selon un autre mode de réalisation de l'invention, les éléments de renforcement des couches de travail sont en métal.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention,
- figure 3, une vue méridienne d'un schéma d'un pneumatique selon un troisième mode de réalisation de l'invention.

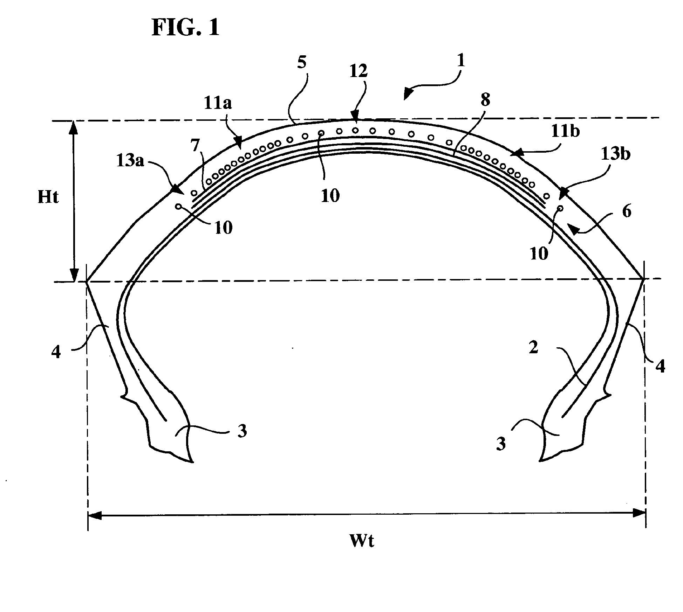

Les figures 1 à 3 ne sont pas représentées à l'échelle pour en simplifier la compréhension.

La figure 1 représente un pneumatique 1 de type 190/50 ZR 17 destiné à équiper l'arrière d'une motocyclette. Ce pneumatique 1 comprend une armature de carcasse constituée d'une couche 2 comportant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

La couche 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6 constituée de deux couches 7 et 8 d'éléments de renforcement faisant des angles avec la direction circonférentielle, lesdits éléments de renforcement étant croisés d'une couche à la suivante en faisant entre eux des angles égaux à 50° dans la zone du plan équatorial, les éléments de renforcement de chacune des couches 7 et 8 formant un angle égal à 25° avec la direction circonférentiel.

Les éléments de renforcement des deux couches 7 et 8 sont en matériau textile et plus précisément en aramide.

L'armature de sommet 6 comporte, conformément à l'invention, une couche d'éléments de renforcement circonférentiels 10 radialement à l'extérieur des couches 7, 8. La couche d'éléments de renforcement circonférentiels 10 est ainsi la partie de l'armature de sommet 6 radialement extérieure et les deux couches de travail 7, 8 sont intercalées entre la couche de carcasse 2 et la couche d'éléments de renforcement circonférentiels 10. La couche d'éléments de renforcement circonférentiels 10 est avantageusement constituée d'un seul fil enroulé pour former un angle avec la direction longitudinale sensiblement égal à 0°. La couche d'éléments de renforcement circonférentiels 10 peut encore être réalisée par l'enroulement simultané de plusieurs fils nus, gommés ou sous forme de bandelettes lorsqu'ils sont noyés dans du caoutchouc.

L'enroulement des éléments de renforcement circonférentiels 10 est réalisé de sorte que le pas entre deux éléments de renforcement circonférentiels varie selon la direction axiale.

Cette variation du pas de pose conduit à une variation de la densité d'éléments de renforcement circonférentiels telle que la densité soit plus importante dans les parties intermédiaires 11a et 11b. Les densités d'éléments de renforcement circonférentiels vont donc en diminuant d'une part, depuis ces parties intermédiaires 11a et 11b avec une valeur de 100 fils /dm (pas de 1 mm) vers la partie centrale 12 du pneumatique avec une valeur de 75 fils/dm (pas de 1.33 mm) et, d'autre part, depuis ces parties intermédiaires 11a et 11b vers les parties latérales 13a, 13b de ladite couche d'éléments de renforcement circonférentiels 10 avec une valeur de 70 fils /dm (pas de 1.43 mm).

Le rapport de la valeur du pas des parties axialement extérieures 13a, 13b sur la valeur du pas dans la partie centrale 12 est égal à 1.07 et donc compris entre 1.05 et 4.

Le rapport de la valeur du pas des parties intermédiaires 11a, 11b sur la valeur du pas dans la partie centrale 12 est égal à 0.75 et donc compris entre 0.5 et 0.95.

La largeur de la couche d'éléments de renforcement circonférentiels 10 est égale à 170 mm.

Les parties 11a et 11b présentent chacune une largeur axiale égale à 62 mm. La largeur axiale de chacune des parties intermédiaires 11a et 11b de la couche d'éléments de renforcement circonférentiels est égale à 36 % de la largeur axiale de la couche d'éléments de renforcement circonférentiels comprise entre 10 et 38 % de la ladite largeur.

La partie centrale 12 présente une largeur axiale égale à 20 mm. La largeur axiale de la partie centrale de la couche d'éléments de renforcement circonférentiels est égale à 12 % de la largeur axiale de la couche d'éléments de renforcement circonférentiels et donc comprise entre 10 et 50 % de ladite largeur.

Les parties 13a et 13b présentent chacune une largeur axiale égale à 13 mm. La largeur axiale de chacune des parties axialement extérieures13a et 13b de la couche d'éléments de renforcement circonférentiels est égale à 8 % de la largeur axiale de la couche d'éléments de renforcement circonférentiels et donc comprise entre 7 et 15 % de ladite largeur.

Conformément à l'invention dans le cas d'un pneumatique destiné à équiper l'arrière d'une motocyclette, la valeur du pas dans une partie axialement extérieure est supérieure à la valeur du pas de la partie centrale. La rigidité selon la direction circonférentielle de la partie axialement extérieure de la couche d'éléments de renforcement circonférentiels est donc inférieure à la rigidité selon la direction circonférentielle de la partie centrale.

La présence de la couche d'éléments de renforcement circonférentiels dans le pneumatique contribue d'une part à l'amélioration des performances en termes d'endurance et d'autre part, la répartition avec un pas variable autorise une modulation des rigidités circonférentielles de l'armature sommet du pneumatique afin d'optimiser les compromis entre la mise à plat, l'usure et la tenue à la vitesse du pneumatique.

La couche d'éléments de renforcement circonférentiels 10 est constituée de renforts textiles de type métal 6*23.

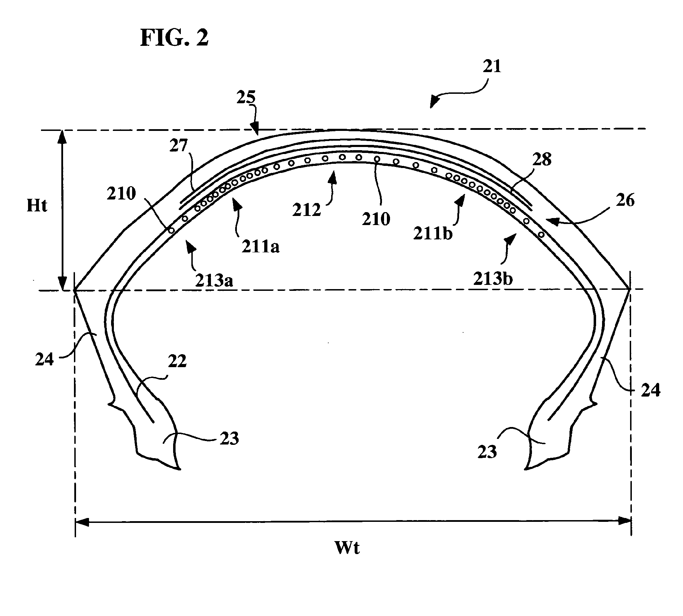

Sur la figure 2, est représenté un pneumatique 21 semblable à celui de la figure 1 et qui en diffère par la position radiale de la couche d'éléments de renforcement circonférentiels 210. Sur cette deuxième représentation conforme à l'invention, la couche d'éléments de renforcement circonférentiels 210 a été mise en place radialement à l'intérieur de l'armature de carcasse 2 et donc radialement à l'intérieur des deux couches de travail 27, 28. Cette position radiale de la couche d'éléments de renforcement circonférentiels 210 permet notamment d'améliorer encore les propriétés d'adhérence et de motricité du pneumatique.

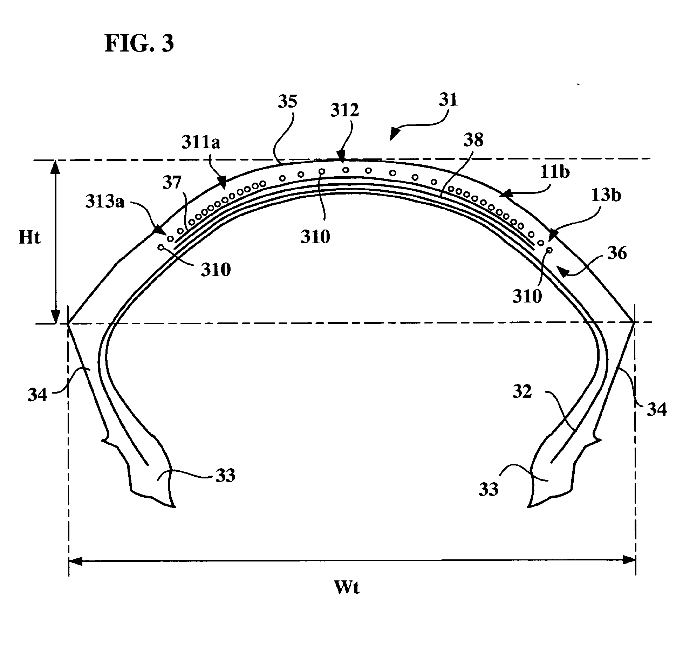

La figure 3 représente un pneumatique 31 de type 120/70 ZR 17 destiné à équiper l'avant d'une motocyclette.

L'armature sommet 36 du pneumatique 31 est semblable à celle du pneumatique 1 illustré sur la figure 1. Seule diffère la couche d'éléments de renforcement circonférentiels 310 et plus exactement la variation du pas de pose des éléments de renforcement.

Comme dans le cas de la figure 1 et conformément à l'invention, la variation du pas de pose conduit à une variation de la densité d'éléments de renforcement circonférentiels telle que la densité soit plus importante dans les parties intermédiaires 311a et 311b. Les densités d'éléments de renforcement circonférentiels vont donc en diminuant d'une part, depuis ces parties intermédiaires 311a et 311b avec une valeur de 90 fils /dm (pas de 1.11 mm) vers la partie centrale 312 du pneumatique avec une valeur de 60 fils/dm (pas de 1.67 mm) et, d'autre part, depuis ces parties intermédiaires 311a et 311b vers les parties latérales 313a, 313b de ladite couche d'éléments de renforcement circonférentiels 310 avec une valeur de 70 fils /dm (pas de 1.43 mm).

Contrairement au cas de la figure 1 et conformément à l'invention dans le cas d'un pneumatique destiné à équiper l'avant d'une motocyclette, la valeur du pas dans une partie axialement extérieure 313a, 313b est inférieure à la valeur du pas de la partie centrale. La rigidité selon la direction circonférentielle de la partie axialement extérieure de la couche d'éléments de renforcement circonférentiels est donc supérieure à la rigidité selon la direction circonférentielle de la partie centrale.

Le rapport de la valeur du pas des parties axialement extérieures 313a, 313b sur la valeur du pas dans la partie centrale 312 est égal à 0.86 et donc compris entre 0.5 et 0.95.

Le rapport de la valeur du pas des parties intermédiaires 11a, 11b sur la valeur du pas dans la partie centrale 12 est égal à 0.67 et donc compris entre 0.4 et 0.7.

La largeur de la couche d'éléments de renforcement circonférentiels 10 est égale à 106 mm.

Les parties 311a et 311b présentent chacune une largeur axiale égale à 20 mm. La largeur axiale de chacune des parties intermédiaires 311a et 311b de la couche d'éléments de renforcement circonférentiels est égale à 19 % de la largeur axiale de la couche d'éléments de renforcement circonférentiels comprise entre 10 et 38 % de la ladite largeur.

La partie centrale 312 présente une largeur axiale égale à 40 mm. La largeur axiale de la partie centrale 312 de la couche d'éléments de renforcement circonférentiels est égale à 38 % de la largeur axiale de la couche d'éléments de renforcement circonférentiels et donc comprise entre 10 et 50 % de ladite largeur.

Les parties 313a et 313b présentent chacune une largeur axiale égale à 13 mm. La largeur axiale de chacune des parties axialement extérieures 313a et 313b de la couche d'éléments de renforcement circonférentiels est égale à 12 % de la largeur axiale de la couche d'éléments de renforcement circonférentiels et donc comprise entre 7 et 15 % de ladite largeur.

La couche d'éléments de renforcement circonférentiels 10 est constituée de renforts textiles de type métal 4*23.

L'invention ne doit pas être comprise comme étant limitée à la description des exemples ci-dessus. L'invention s'étend notamment à des pneumatiques pouvant comporter des armatures de sommet plus complexes comportant par exemple trois, ou plus, couches de travail d'éléments de renforcement faisant un angle avec la direction circonférentielle.

L'invention s'applique également aux différents cas d'armature de sommet énoncés précédemment et notamment décrits dans les demandes de brevet WO 2004/018236, WO 2004/018237, WO 2005/070704, WO 2005/070706, présentant notamment les différentes positions radiales des couches constituant l'armature de sommet les unes par rapport aux autres, ainsi que leur position radiale par rapport à la structure de carcasse, ainsi encore que la constitution d'une couche formée par un fil constituant des tronçons liés par des boucles ou encore la variation des angles desdits tronçons selon la direction axiale.

## Revendications

1. Pneumatique (1) à armature de carcasse radiale (2) comprenant une armature de sommet (6), comportant au moins une couche d'éléments de renforcement (10) circonférentiels répartis axialement selon un pas variable, elle-même coiffée radialement d'une bande de roulement (5), ladite bande de roulement (5) étant réunie à deux bourrelets (3) par l'intermédiaire de deux flancs (4), la couche d'éléments de renforcement (10) circonférentiels étant constituée d'au moins cinq parties dont une partie centrale (12), deux parties intermédiaires (11a,11b) et deux parties axialement extérieures, (13a, 13b) **caractérise en ce que** la valeur du pas dans une partie intermédiaire (11a, 11b) est est inférieure à la valeur du pas de la partie axialement extérieure (12a, 13b) axialement séparée de la partie centrale (12) par ladite partie intermédiaire (11a,11b) **en ce que** la valeur du pas dans une partie intermédiaire (11a, 11b) est inférieure à la valeur du pas de la partie centrale (12).

2. Pneumatique (1) selon la revendication 1, **caractérisé en ce que** la valeur du pas dans une partie axialement extérieure (13a,13b) est supérieure à la valeur du pas de la partie centrale (12).

3. Pneumatique (1) selon la revendication 2, **caractérisé en ce que** le rapport de la valeur du pas des parties axialement extérieures (13a, 13b) sur a valeur du pas dans la partie centrale (12) est compris entre 1.05 et 4.

4. Pneumatique' selon la revendication 2 ou 3, **caractérisé en ce que** le rapport de la valeur du pas des parties intermédiaires (11a, 11b) sur a valeur du pas dans la partie centrale (12) est compris entre 0.5 et 0.95.

5. Pneumatique (12) selon la revendication 1, **caractérisé en ce que** la valeur du pas dans une partie axialement extérieure (13a, 13b) est inférieure à la valeur du pas de la partie centrale (12).

6. Pneumatique (1) selon la revendication 5, **caractérisé en ce que** le rapport de la valeur du pas des parties axialement extérieures (13a, 13b) sur la valeur du pas dans la partie centrale (12) est compris entre 0.5 et 0.95.

7. Pneumatique (1) selon la revendication 5 ou 6, **caractérisé en ce que** le rapport de la valeur du pas des parties intermédiaires (11a,11b) sur la valeur du pas dans la partie (12) est compris entre 0.4 et 0.7.

8. Pneumatique (1) selon l'une des revendications précédentes, **caractérisé en ce que** la largeur axiale de la partie centrale (12) de la couche d'éléments de renforcement (10) circonférentiels est comprise entre 10 et 50 % de la largeur axiale de la couche d'éléments de renforcement (10) circonférentiels.

9. Pneumatique (1) selon l'une des revendications précédentes, **caractérisé en ce que** la largeur axiale de chacune des parties axialement extérieures (13a,13b) de la couche d'éléments de renforcement (10) circonférentiels est comprise entre 7 et 15% de la largeur axiale de la couche d'éléments de renforcement (10) circonférentiels.

10. Pneumatique (1) selon l'une des revendications précédentes, **caractérisé en ce que** la 10 - Pneumatique' selon l'une des revendications précédentes, **caractérisé en ce que** la largeur axiale de chacune des parties intermédiaires (11a, 11b) de la couche d'éléments de renforcement circonférentiels (10) est comprise entre 10 et 38 % de la largeur axiale de la couche d'éléments de renforcement circonférentiels (20).

11. Pneumatique (1) selon l'une des revendications précédentes, **caractérisé en ce que** la répartition des valeurs du pas de la couche d'éléments de renforcement circonférentiels (10) est symétrique par rapport au plan équatorial du pneumatique.

12. Pneumatique (1) selon l'une des revendications précédentes, **caractérisé en ce que** l'armature de sommet (6) comporte au moins deux couches (7,8) de sommet de travail d'éléments de renforcement inextensibles, croisés d'une couche à l'autre en faisant avec la direction circonférentielle des angles compris entre 10° et 45°

13. Pneumatique (1) selon l'une des revendications précédentes, **caractérisé en ce que** les éléments de renforcement de la structure de renfort de type carcasse (2) font avec la direction circonférentielle un angle compris entre 65° et 90°.

14. Pneumatique (1) selon l'une des revendications précédentes, **caractérisé en ce que** la structure de renforcement de sommet (6) comporte au moins deux couches d'éléments de renforcement (7,8) et **en ce que** d'une couche à la suivante les tronçons forment entre eux des angles compris entre 20 et 160°.

15. Utilisation d'un pneumatique (1) tel que décrit selon l'une des revendications 1 à 14 pour un véhicule motorisé à deux roues tel qu'une motocyclette.

## Claims

1. Tyre (1) with a radial carcass reinforcement (2) comprising a crown reinforcement (6) comprising at least one layer of circumferential reinforcing elements (10) distributed axially at a variable pitch itself radially crowned by a tread strip (5), the said tread strip (5) being connected to two beads (3) by two sidewalls (4), the layer of circumferential reinforcing elements (10) consisting of at least five parts, namely a central part (12), two intermediate parts (11a, 11b) and two axially outer parts (13a, 13b), **characterized in that** the value of the pitch in an intermediate part (11a, 11b) is less than the value of the pitch in the axially outer part (13a, 13b) axially separated from the central part (12) by the said intermediate part (11a, 11b), and **in that** the value of the pitch in an intermediate part (11a, 11b) is less than the value of the pitch in the central part (12).

2. Tyre (1) according to Claim 1, **characterized in that** the value of the pitch in an axially outer part (13a, 13b) is greater than the value of the pitch in the central part (12).

3. Tyre (1) according to Claim 2, **characterized in that** the ratio of the value of the pitch in the axially outer parts (13a, 13b) to the value of the pitch in the central part (12) is comprised between 1.05 and 4.

4. Tyre (1) according to Claim 2 or 3, **characterized in that** the ratio of the value of the pitch in the intermediate parts (11a, 11b) to the value of the pitch in the central part (12) is comprised between 0.5 and 0.95.

5. Tyre (1) according to Claim 1, **characterized in that** the value of the pitch in an axially outer part (13a, 13b) is less than the value of the pitch in the central part (12).

6. Tyre (1) according to Claim 5, **characterized in that** the ratio of the value of the pitch in the axially outer parts (13a, 13b) to the value of the pitch in the central part (12) is comprised between 0.5 and 0.95.

7. Tyre (1) according to Claim 5 or 6, **characterized in that** the ratio of the value of the pitch in the intermediate parts (11a, 11b) to the value of the pitch in the central part (12) is comprised between 0.4 and 0.7.

8. Tyre (1) according to one of the preceding claims, **characterized in that** the axial width of the central part (12) of the layer of circumferential reinforcing elements (10) is comprised between 10 and 50% of the axial width of the layer of circumferential reinforcing elements (10).

9. Tyre (1) according to one of the preceding claims, **characterized in that** the axial width of each of the axially outer parts (13a, 13b) of the layer of circumferential reinforcing elements (10) is comprised between 7 and 15% of the axial width of the layer of circumferential reinforcing elements (10).

10. Tyre (1) according to one of the preceding claims, **characterized in that** the axial width of each of the intermediate parts (11a, 11b) of the layer of circumferential reinforcing elements (10) is comprised between 10 and 38% of the axial width of the layer of circumferential reinforcing elements (10).

11. Tyre (1) according to one of the preceding claims, **characterized in that** the distribution of the values of the pitch of the layer of circumferential reinforcing elements (10) is symmetric with respect to the equatorial plane of the tyre.

12. Tyre (1) according to one of the preceding claims, **characterized in that** the crown reinforcement (6) comprises at least two working crown layers (7, 8) of inextensible reinforcing elements, crossed from one layer to the other making angles comprised between 10° and 45° with the circumferential direction.

13. Tyre (1) according to one of the preceding claims, **characterized in that** the reinforcing elements of the carcass-type reinforcing structure (2) make an angle comprised between 65° and 90° with the circumferential direction.

14. Tyre (1) according to one of the preceding claims, **characterized in that** the crown reinforcing structure (6) comprises at least two layers of reinforcing elements (7, 8), and **in that** from one layer to the next, the portions make angles comprised between 20 and 160° with one another.

15. Use of a tyre (1) as described in one of Claims 1 to 14 for a motorised two-wheel vehicle such as a motorcycle.

## Patentansprüche

1. Luftreifen (1) mit radialer Karkassenbewehrung (2), der eine Scheitelbewehrung (6) enthält, die mindestens eine Schicht von axial gemäß einem variablen Abstand verteilten Umfangsverstärkungselementen (10) aufweist, die selbst radial von einem Laufstreifen (5) überlagert wird; wobei der Laufstreifen (5) über zwei Flanken (4) mit zwei Wülsten (3) verbunden ist, wobei die Schicht von Umfangsverstärkungselementen (10) aus mindestens fünf Teilen besteht, darunter ein zentraler Teil (12), zwei Zwischenteile (11a, 11b) und zwei axial äußere Teile (13a, 13b), **dadurch gekennzeichnet, dass** die Größe des Abstands in einem Zwischenteil (11a, 11b) geringer als die Größe des Abstands des axial äußeren Teils (13a, 13b) ist, der axial durch den Zwischenteil (11a, 11b) vom zentralen Teil (12) getrennt ist, und dass die Größe des Abstands in einem Zwischenteil (11a, 11b) geringer als die Größe des Abstands im zentralen Teil (12) ist.

2. Luftreifen (1) nach Anspruch 1, **dadurch gekennzeichnet, dass** die Größe des Abstands in einem axial äußeren Teil (13a, 13b) größer als die Größe des Abstands des zentralen Teils (12) ist.

3. Luftreifen (1) nach Anspruch 2, **dadurch gekennzeichnet, dass** das Verhältnis der Größe des Abstands der axial äußeren Teile (13a, 13b) zur Größe des Abstands im zentralen Teil (12) zwischen 1,05 und 4 liegt.

4. Luftreifen (1) nach Anspruch 2 oder 3, **dadurch gekennzeichnet, dass** das Verhältnis der Größe des Abstands der Zwischenteile (11a, 11b) zur Größe des Abstands im zentralen Teil (12) zwischen 0,5 und 0,95 liegt.

5. Luftreifen (1) nach Anspruch 1, **dadurch gekennzeichnet, dass** die Größe des Abstands in einem axial äußeren Teil (13a, 13b) geringer als die Größe des Abstands des zentralen Teils (12) ist.

6. Luftreifen (1) nach Anspruch 5, **dadurch gekennzeichnet, dass** das Verhältnis der Größe des Abstands der axial äußeren Teile (13a, 13b) zur Größe des Abstands im zentralen Teil (12) zwischen 0,5 und 0,95 liegt.

7. Luftreifen (1) nach Anspruch 5 oder 6, **dadurch gekennzeichnet, dass** das Verhältnis der Größe des Abstands der Zwischenteile (11a, 11b) zur Größe des Abstands im zentralen Teil (12) zwischen 0,4 und 0,7 liegt.

8. Luftreifen (1) nach einem der vorhergehenden Ansprüche, **dadurch gekennzeichnet, dass** die axiale Breite des zentralen Teils (12) der Schicht von Umfangsverstärkungselementen (10) zwischen 10 und 50 % der axialen Breite der Schicht von Umfangsverstärkungselementen (10) liegt.

9. Luftreifen (1) nach einem der vorhergehenden Ansprüche, **dadurch gekennzeichnet, dass** die axiale Breite jedes der axial äußeren Teile (13a, 13b) der Schicht von Umfangsverstärkungselementen (10) zwischen 7 und 15 % der axialen Breite der Schicht von Umfangsverstärkungselementen (10) liegt.

10. Luftreifen (1) nach einem der vorhergehenden Ansprüche, **dadurch gekennzeichnet, dass** die axiale Breite jedes der Zwischenteile (11a, 11b) der Schicht von Umfangsverstärkungselementen (10) zwischen 10 und 38 % der axialen Breite der Schicht von Umfangsverstärkungselementen (10) liegt.

11. Luftreifen (1) nach einem der vorhergehenden Ansprüche, **dadurch gekennzeichnet, dass** die Verteilung der Größen des Abstands der Schicht von Umfangsverstärkungselementen (10) bezüglich der Äquatorialebene des Luftreifens symmetrisch ist.

12. Luftreifen (1) nach einem der vorhergehenden Ansprüche, **dadurch gekennzeichnet, dass** die Scheitelbewehrung (6) mindestens zwei Arbeitsscheitelschichten (7, 8) von nicht dehnbaren Verstärkungselementen aufweist, die sich von einer Schicht zur anderen kreuzen, indem sie mit der Umfangsrichtung Winkel zwischen 10° und 45° bilden.

13. Luftreifen (1) nach einem der vorhergehenden Ansprüche, **dadurch gekennzeichnet, dass** die Verstärkungselemente der Verstärkungsstruktur von der Art Karkasse (2) mit der Umfangsrichtung einen Winkel zwischen 65° und 90° bilden.

14. Luftreifen (1) nach einem der vorhergehenden Ansprüche, **dadurch gekennzeichnet, dass** die Scheitelverstärkungsstruktur (6) mindestens zwei Schichten von Verstärkungselementen (7, 8) aufweist, und dass von einer Schicht zur nächsten die Abschnitte Winkel zwischen 20 und 160° miteinander bilden.

15. Verwendung eines gemäß einem der Ansprüche 1 bis 14 beschriebenen Luftreifens (1) für ein motorisiertes Zweiradfahrzeug wie ein Motorrad.
